# EUROPEAN PATENT APPLICATION

(11) **EP 3 067 800 A1**
(43) Date of publication of application: **14.09.2016**
(21) Application number: 16151386.6
(22) Date of filing: 14.01.2016
(51) Int. Cl.: G06F 13/40, G06F 7/76

(54) **SYSTEM AND METHOD FOR ENDIAN CORRECTION OF COMPLEX DATA STRUCTURES IN HETEROGENEOUS SYSTEMS**

(30) Priority: 23.01.2015 US 201514604346
(71) Applicant: Honeywell International Inc., Morris Plains, NJ 07950 (US)
(72) Inventor: RACHLIN, Elliott, Morris Plains, NJ New Jersey 07950 (US)
(74) Representative: Houghton, Mark Phillip

(57) **Abstract**

A method includes determining that a received message includes one or more data elements to be converted from a first endian format to a second endian format based on endian formats of a transmitter (111, 112, 121, 122) and an intended recipient (111, 112, 121, 122) of the message. The method also includes determining (610-640) a type of the received message and, based on the type, selecting a remediation routine for the message from a data structure (230, 232) that includes a plurality of remediation routines for a plurality of message types. The method further includes remediating (650, 660) the message by changing the one or more data elements in the message from the first endian format to the second endian format according to instructions in the selected remediation routine. In addition, the method includes transmitting the remediated message to the intended recipient.

## Description

### TECHNICAL FIELD

This disclosure relates generally to data compatibility. More specifically, this disclosure relates to a system and method for endian correction of complex data structures between different devices in heterogeneous systems.

### BACKGROUND

The term "endian" refers to the convention used to store and interpret one or more bytes making up a data word or message when stored in computer memory. Each byte of data in memory has its own address. When reading or writing a data word containing multiple bytes, the order of the bytes stored in memory determines the interpretation of the data word.

Big-endian systems store the most significant byte of a data word in the smallest address and the least significant byte in the largest address. In contrast, little-endian systems store the least significant byte of a data word in the smallest address. When data is moved from a big-endian device or system to a little-endian device or system (or vice versa), the data needs to be converted to the appropriate "endianness," or the receiving device or system needs to account for the difference.

### SUMMARY

This disclosure provides a system and method for endian correction of complex data structures between different devices in heterogeneous systems.

In a first embodiment, a method includes determining that a received message includes one or more data elements to be converted from a first endian format to a second endian format based on endian formats of a transmitter and an intended recipient of the message. The method also includes determining a type of the received message and, based on the type, selecting a remediation routine for the message from a data structure that includes a plurality of remediation routines for a plurality of message types. The method further includes remediating the message by changing the one or more data elements in the message from the first endian format to the second endian format according to instructions in the selected remediation routine. In addition, the method includes transmitting the remediated message to the intended recipient.

In a second embodiment, an apparatus includes at least one network interface and at least one processor. The at least one network interface is configured to receive and transmit messages over at least one network. The at least one processing device is configured to determine that a received message includes one or more data elements to be converted from a first endian format to a second endian format based on endian formats of a transmitter and an intended recipient of the message. The at least one processing device is also configured to determine a type of the received message and, based on the type, select a remediation routine for the message from a data structure that includes a plurality of remediation routines for a plurality of message types. The at least one processing device is further configured to remediate the message by changing the one or more data elements in the message from the first endian format to the second endian format according to instructions in the selected remediation routine and initiate transmission of the remediated message to the intended recipient.

In a third embodiment, a method includes receiving at least one source file associated with a data endian remediation process for a plurality of message types. Each message type includes one or more data elements to be converted from a first endian format to a second endian format. The at least one source file includes a distinct record block for each of the message types. The method also includes converting the at least one source file into at least one machine-readable data structure configured for use in the data endian remediation process of a message having a message type among the plurality of message types.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example heterogeneous system according to this disclosure;
FIGURE 2 illustrates an example system for endian correction of complex data structures in a heterogeneous system according to this disclosure;
FIGURE 3 illustrates an example data structure for a table according to this disclosure;
FIGURES 4A through 4J show different examples of record blocks that can make up part of a table according to this disclosure;
FIGURES 5A and 5B illustrate portions of example tables according to this disclosure;
FIGURE 6 illustrates an example message remediator of FIGURE 1 according to this disclosure;
FIGURE 7 illustrates an example variable format message according to this disclosure;
FIGURE 8 illustrates an example use of variable array and case functions according to this disclosure;
FIGURE 9 illustrates a portion of an example record block for a variable format message according to this disclosure;
FIGURE 10 illustrates an example use of a message buffer pointer and a program pointer during endian remediation according to this disclosure; and
FIGURE 11 illustrates an example device for endian correction of complex data structures according to this disclosure.

### DETAILED DESCRIPTION

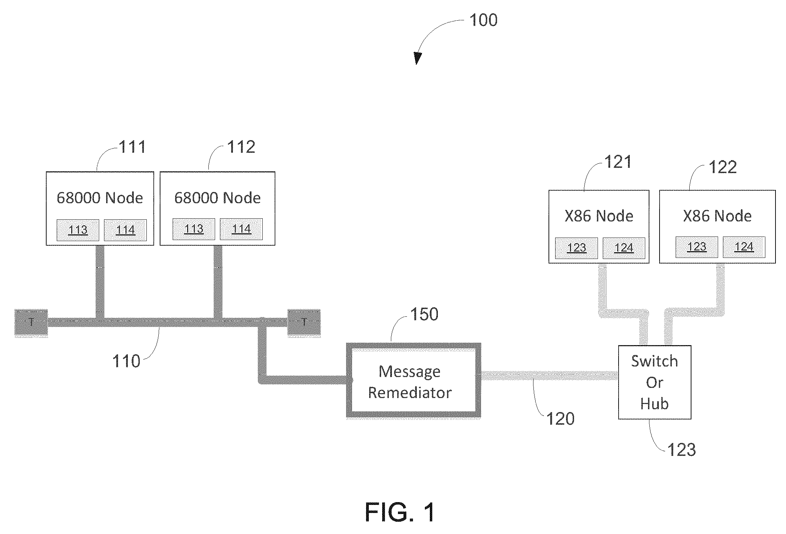

FIGURES 1 through 11, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

In a system or network of computers or other devices, there may be a variety of devices that are produced by different manufacturers or that operate using different operating systems. For example, some devices may represent general-purpose computers that include x86 processors by INTEL, while other devices may represent controllers in a process control system, such as those used in an industrial manufacturing or processing system (like a refinery, chemical plant, or factory). Such controllers may include 68000-family processors by MOTOROLA. When devices of different types in a mixed network exchange data, the data generally needs be arranged into a form that is compatible with both devices.

In some systems, certain devices may be big-endian, while other devices might be little-endian. When data messages having complex data structures are shared between devices of differing "endian" architectures, those devices are unable to directly share data due to differences in byte ordering of numerical values. For example, a message can have potentially hundreds or thousands of integers or floating-point values. Such a message may be stored in big-endian format at a transmitter, while an intended receiver is configured to interpret values stored in little-endian format (or vice versa). As used in this document, a "message" generally refers to any type of aggregated data arranged in a sequence and does not necessarily refer to any particular record or structure.

Applications running on each device may or may not know the particular endian format of a message that is received. A process in an operating system or lower level is therefore used to detect any difference between the endian format of the message transmitter and message receiver and to compensate for that difference by converting all or part of the message such that the message is in an endian format compatible with the message receiver. Embodiments of this disclosure provide such a process for classifying, recognizing, and endian-correcting individual data elements or data fields within a complex data structure while maintaining the data structure intact. The process thereby facilitates sharing data structures among devices having differing endian architectures.

FIGURE 1 illustrates an example heterogeneous system 100 according to this disclosure. As shown in FIGURE 1, the heterogeneous system 100 includes a first network 110 and a second network 120 that are both coupled to a message remediator 150. The network 110 includes a number of nodes, including nodes 111-112. Similarly, the network 120 includes a number of nodes, including nodes 121-122. A switch or hub 123 may be used to connect or couple the nodes 121-122 to the network 120.

In this example embodiment, the heterogeneous system 100 can represent all or a portion of a process control system. For example, the nodes 111-112 can include one or more industrial process controllers configured to control process elements in a process or production system that may perform any of a wide variety of functions. As a particular example, the nodes 111-112 could be configured to provide control signals to process elements or equipment used to manufacture chemical, pharmaceutical, paper, or petrochemical products. Each node 111-112 includes any suitable structure for performing one or more functions in a process or production system. The nodes 111-112 could, for example, include one or more processing devices 113 and one or more memories 114 storing instructions and data used, collected, or generated by the processing device(s) 113. As particular examples, the processing devices 113 could include processors in the MOTOROLA 68000 processor family.

As another example, the nodes 121-122 can include one or more operator stations configured for user access and control of the process control system. Each of the nodes 121-122 includes any suitable structure supporting user access and control of the system 100. Each of the nodes 121-122 could, for example, include one or more processing devices 123 and one or more memories 124 storing instructions and data used, collected, or generated by the processing device(s) 123 (such as software executed by the nodes 121-122). In particular embodiments, the nodes 121-122 could represent personal computers executing a MICROSOFT WINDOWS operating system, and the processing devices 123 could include processors in the INTEL x86 processor family.

The nodes 111-112 and 121-122 are coupled to each other and to other components of the system 100 through the networks 110-120. Each network 110-120 facilitates communication between various components in the system 100. Each network 110-120 represents any network or combination of networks facilitating communication between components in the system 100. For example, the network 110 could represent a controller network in a process control system, such as a coaxial cable network or Ethernet network. As other examples, the network 120 could represent an Ethernet network.

In these embodiments, the nodes 111-112, 121-122 support different endian formats. For example, the nodes 111-112 with the 68000 series processors may use big-endian format for data storage, and the network 110 may communicate data in big-endian format. In contrast, the nodes 121-122 with the x86 processor may use little-endian format, and the network 120 may communicate data in little-endian format. Thus, data sent between the network 110 and the network 120 (such as instructions or data transmitted from the node 121 to the node 111 or operational status data transmitted from the node 112 to the node 122) may need to be converted from one endian format to another endian format.

In one aspect of operation, the message remediator 150 receives a data message and determines whether one or more data elements in the message should be converted from one endian format to another endian format based on the endian configuration of the message's transmitter and intended recipient. If it is determined that there are data elements that should be converted, the message remediator 150 converts the data elements to another endian format before transmitting the data message through the system 100. For example, an instruction message transmitted from the node 121 to the node 111 may be received at the message remediator 150 from the network 120 in little endian format. The message remediator 150 can determine that the data in the instruction message should be converted from little-endian format to big-endian format, and the message remediator 150 performs this conversion and passes the converted instruction message to the network 110 for delivery to the node 111. The message remediator 150 may also convert messages from big-endian format to little-endian format, such as for operational status data transmitted from the node 112 to the node 122. The message remediator 150 may perform any suitable network communication process(es) for receiving and transmitting each data message within the system 100. Such processes are known to those of skill in the art and will not be described in detail herein.

Although FIGURE 1 illustrates one example of a heterogeneous system 100, various changes may be made to FIGURE 1. For example, components could be added, omitted, combined, or placed in any other configuration according to particular needs. Also, while described as representing all or a portion of a process control system, the heterogeneous system 100 could be used in any other manner. In addition, FIGURE 1 illustrates one operational environment in which endian correction of complex data structures can be used. The endian correction processes described here could be used in any other device or system.

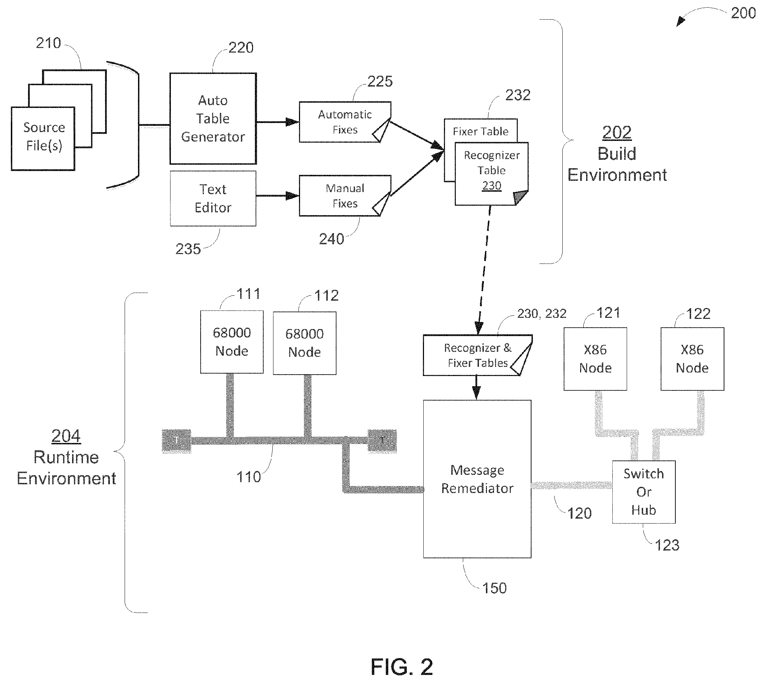

FIGURE 2 illustrates an example system 200 for endian correction of complex data structures in a heterogeneous system according to this disclosure. As shown in FIGURE 2, the system 200 includes a build environment 202 and a runtime environment 204. The runtime environment 204 can include or represent all or a portion of the components of the system 100 shown in FIGURE 1 and described above.

In the build environment 202, one or more operators (such as a system engineer or data administrator) perform research on various types of messages transmitted and received throughout the runtime environment 204. For example, the operators can determine what types of messages are passed between the nodes 111-112 and the nodes 121-122. Such messages may require endian remediation. The research could involve detailed packet inspection, which provides a thorough review and understanding of the internal data structures of each message type. Note, however, that information about the internal data structures of the message types could be identified in other ways, such as via an automated process.

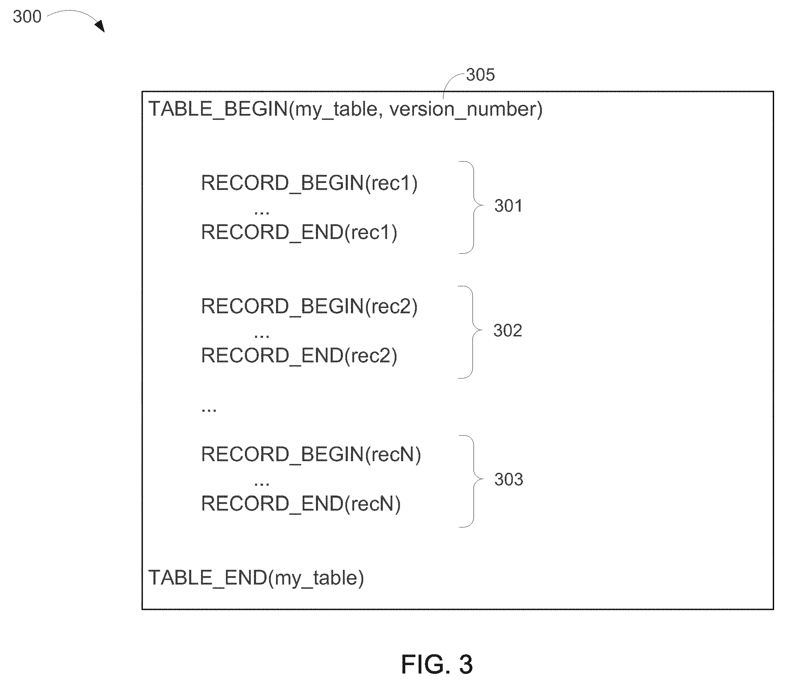

Once a thorough understanding of each message type is obtained, one or more source files 210 are developed for endian remediation of each message type. Each source file 210 can provide information regarding the data of a message type, the arrangement and order of the data in the message, and the steps to recognize and remediate or correct any endian differences in the message type. In some embodiments, the source files 210 are arranged similar to pseudocode that defines the structure of a data table. FIGURES 3 through 4J, described in greater detail below, illustrate different examples of source files 210.

Once the one or more source files 210 are prepared, an auto table generator 220 converts the source files 210 into machine readable automatic fixes 225. The automatic fixes 225 can include machine code, data table structures, or other machine readable files or instructions that, when processed by the message remediator 150, cause the message remediator 150 to remediate endian discrepancy in one or more messages. In some embodiments, the automatic fixes 225 include two tables: a recognizer table 230 and a fixer table 232. The recognizer table 230 is used for recognizing and classifying data structures. The fixer table 232 provides programmatic instructions for the message remediator 150 to walk through data structures, fixing data elements as it encounters them, or stepping over data elements that do not require endian correction. These tables 230-232 are described in greater detail below.

In some embodiments, operators may also develop one or more manual fixes or remediation steps 240 using one or more tools, such as a text editor 235. These manual fixes 240 may be incorporated into the recognizer table 230, the fixer table 232, or both.

The message remediator 150 in the runtime environment 204 uses the tables 230-232 that have been prepared in the build environment 202. For example, the message remediator 150 detects and receives data messages transmitted between nodes 111-112, 121-122 in one endian format, and uses the recognizer table 230 to determine whether the data in each message should be converted to another endian format. If so, the message remediator 150 uses the fixer table 232 to convert the data in each message to the other endian format. The message remediator 150 then transmits each data message into the network 110 or 120 for delivery to its intended recipient(s).

The message remediator 150 can be configured to recognize and remediate arbitrarily complex message formats, including deeply nested array structures, case variant structures, and integer and string data fields of varying lengths. The message remediator 150 can also process "self-defining" messages for which there is no *a priori* structure definition and only an explanation of how to examine the messages to determine what fields are present that may require endian correction. A remediation algorithm performed by the message remediator 150 can be its own inverse, meaning performing the algorithm an even number of times on data regenerates the original data.

In the runtime environment 204, if the message remediator 150 does not recognize a message type of a received message, the message remediator 150 can disregard, flag, or otherwise set the message aside for exception processing. An unrecognized message may not be converted because it could be converted in error, which may result in unwanted or even dangerous situations in an industrial setting (such as turning a control temperature too high).

Although FIGURE 2 illustrates one example of a system 200 for endian correction of complex data structures in a heterogeneous system, various changes may be made to FIGURE 2. For example, various components in FIGURE 2 could be combined, further subdivided, or omitted and additional components could be added according to particular needs. As a particular example, the recognizer table 230 or the fixer table 232 could actually include more than one table or could be configured as any other suitable type of machine-readable data structure, such as a flat file. Also, system build environments and runtime environments can come in a wide variety of configurations, and FIGURE 2 does not limit this disclosure to any particular configuration.

FIGURE 3 illustrates an example data structure for a table 300 according to this disclosure. The table 300 could, for example, represent one or more of the source files 210 in the build environment 202 of FIGURE 2. As shown in FIGURE 3, the table 300 includes multiple record blocks 301-303. Each record block 301-303 includes code or instructions that describe one or more message types, including how to recognize the message (such as based on what device sent the message and what is the form of its contents) and how to process the message (such as what portion(s) of the data in the message require endian correction). In some embodiments, there is one record block for each distinct type of message. While the table 300 includes three record blocks 301-303, a complete table can have hundreds or thousands of record blocks representing hundreds or thousands of distinct message types. In particular embodiments, the table 300 may include a version number argument or parameter, which can be useful for tracking and avoiding configuration errors.

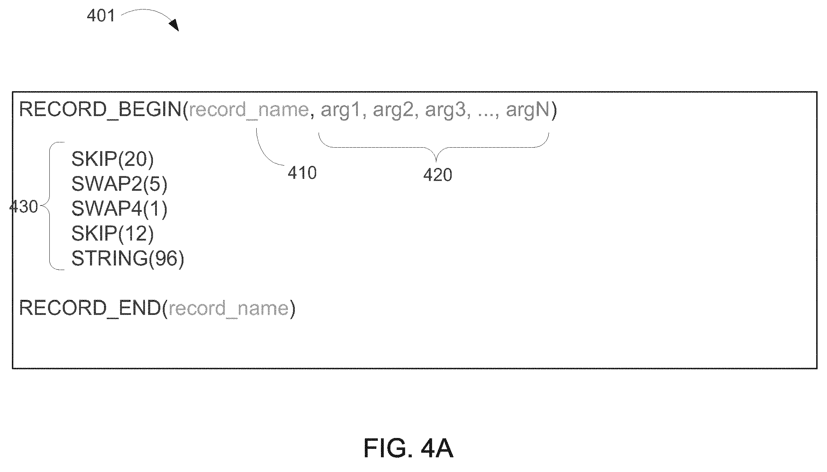

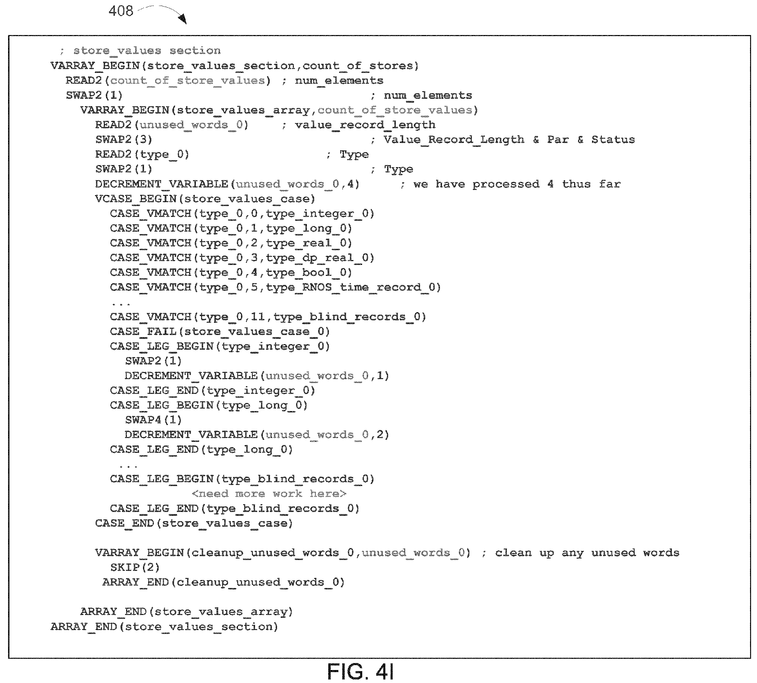

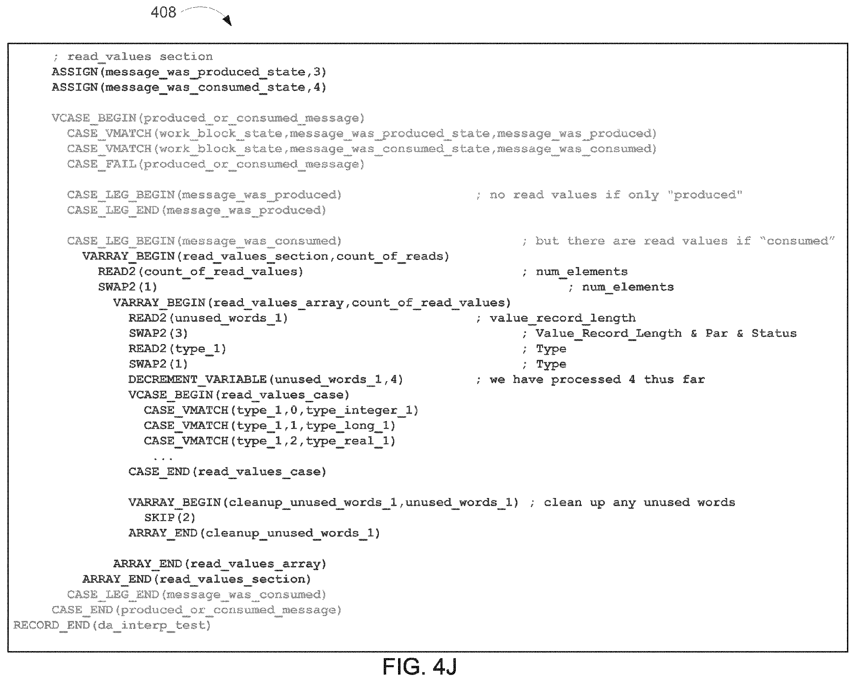

FIGURES 4A through 4J show different examples of record blocks 401-408 that can make up part of a table according to this disclosure. The record blocks 401-408 could, for example, be used in the table 300 of FIGURE 3.

A record block identifies a message type and provides instructions for endian correction of the message type. FIGURE 4A depicts a generic record block format. As shown here, each record block 401-408 can include a record name 410 and one or more data parameters or arguments 420. The record name 410 corresponds to a particular message type and the instruction code in the recognizer table 230 and fixer table 232 for that message type. The data parameters 420 provide input parameters to the message remediator 150. In some embodiments, one or more of the data parameters 420 are recognition criteria or matching criteria, where a particular record block applies for remediation if a received message includes the data parameters 420 in its header.

Each record block 401-408 also has an endian-correcting algorithm 430 appropriate to the message type. In FIGURE 4A, the example endian-correcting algorithm 430 illustrates some basic commands used in remediation. The remediation process applies to 2-, 4-, and 8-byte integers and to 4- and 8-byte floating point values. The remediation process also applies to strings if the strings are created as "integer pair" or "long-word quad" values. However, if a string is created (and accessed) as a byte array, it may be intrinsically-big endian, and no conversion is needed.

The basic commands governing a "walk through and correct" process of examining and modifying a message are shown in FIGURE 4A. The SKIP(N) command instructs the remediator 150 to skip ahead (and do not byte swap) the next N bytes in a message. The SWAP2(N) command instructs the remediator 150 to perform 2-byte (16-bit) swaps on the next N byte pairs, which can apply to "short integers." The SWAP4(N) command instructs the remediator 150 to perform 4-byte (32-bit) swaps on the next N byte quads, which can apply to "long integers" or "single precision real numbers." The STRING(N) command instructs the remediator 150 to perform byte swaps of a string of length N characters. In some embodiments, a SWAP8(N) command can instruct the remediator 150 to perform 8-byte swaps on floating point values.

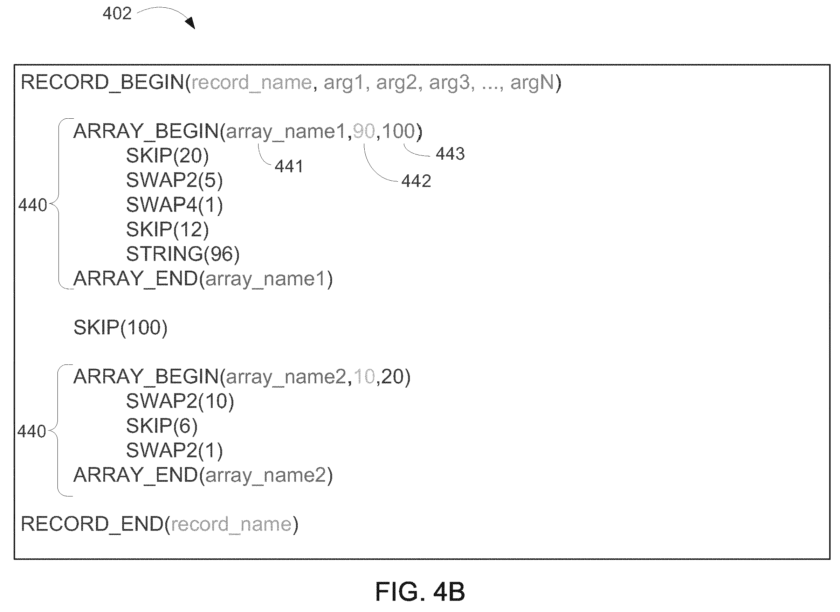

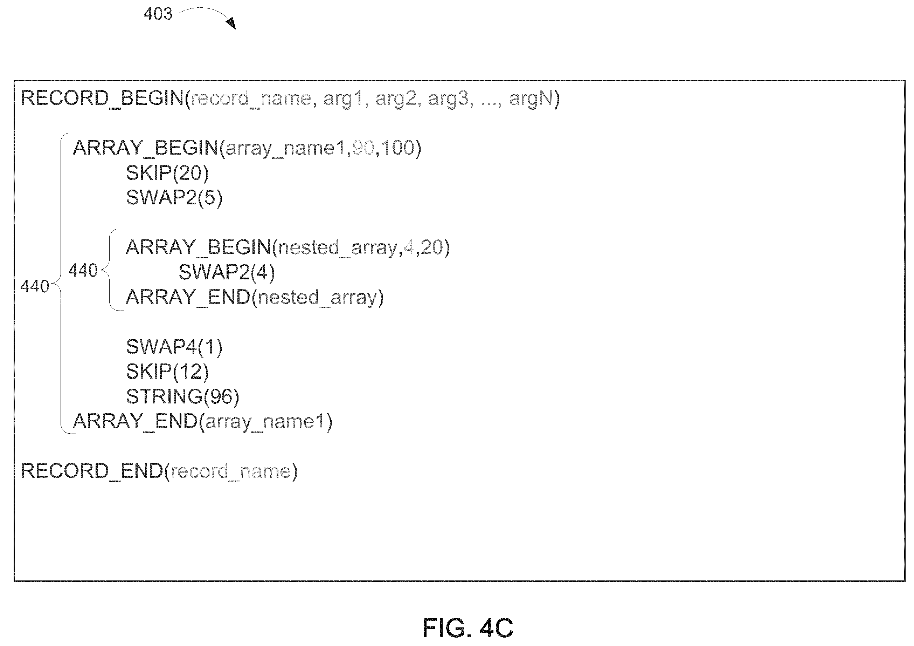

FIGURES 4B and 4C illustrate example record blocks 402-403 that include various array declarations 440 in the record block. In some embodiments, a message can contain one or more arrays of elements, which can be complex structures. Each array declaration 440 can correspond to instruction code or definitions of an array in the tables 230-232. As shown in FIGURE 4B, an array declaration 440 includes the name 441 of the array, the number of elements 442 in the array (the size of the array), and the size 443 of each element in the array (in bytes). Within the bounds of each array declaration 440 are commands governing the remediation process. Arrays can be nested, both in the source file (as shown in FIGURE 4C) and in the tables 230-232.

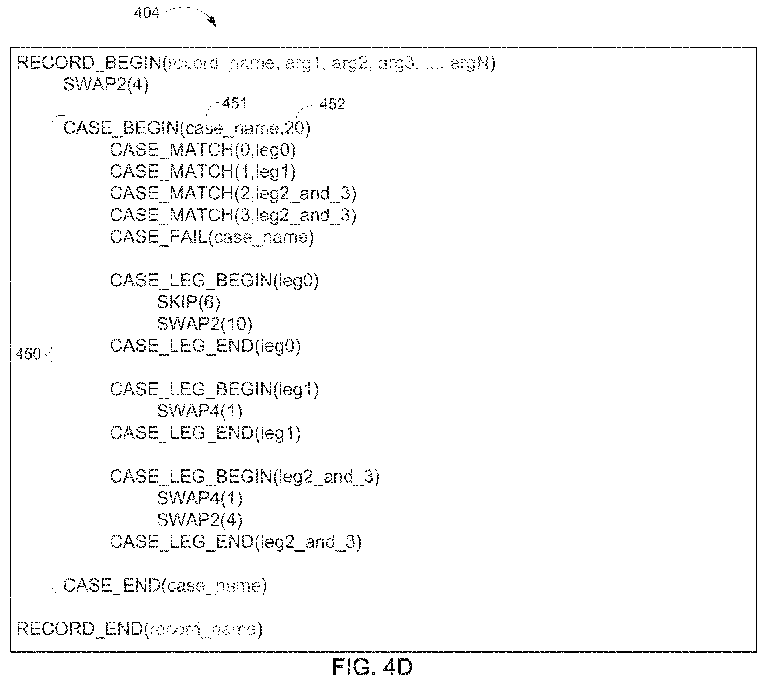

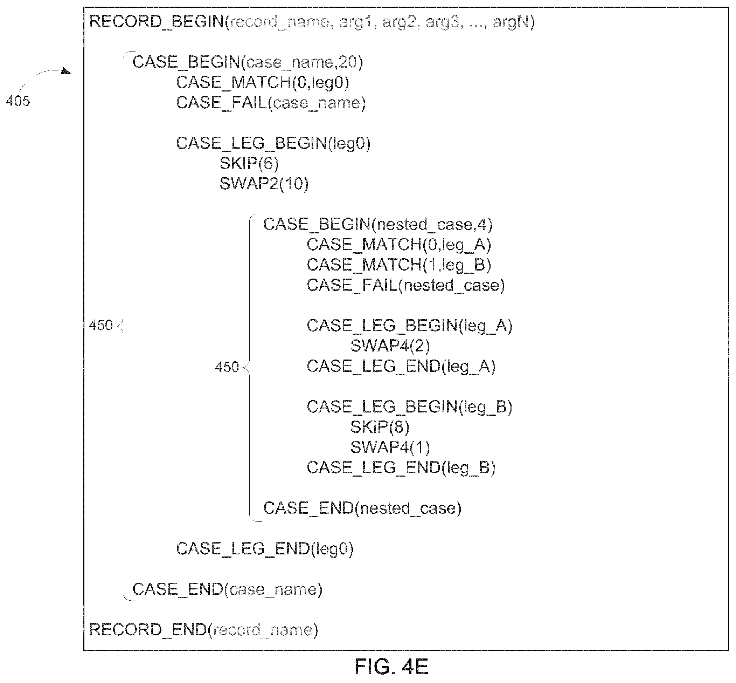

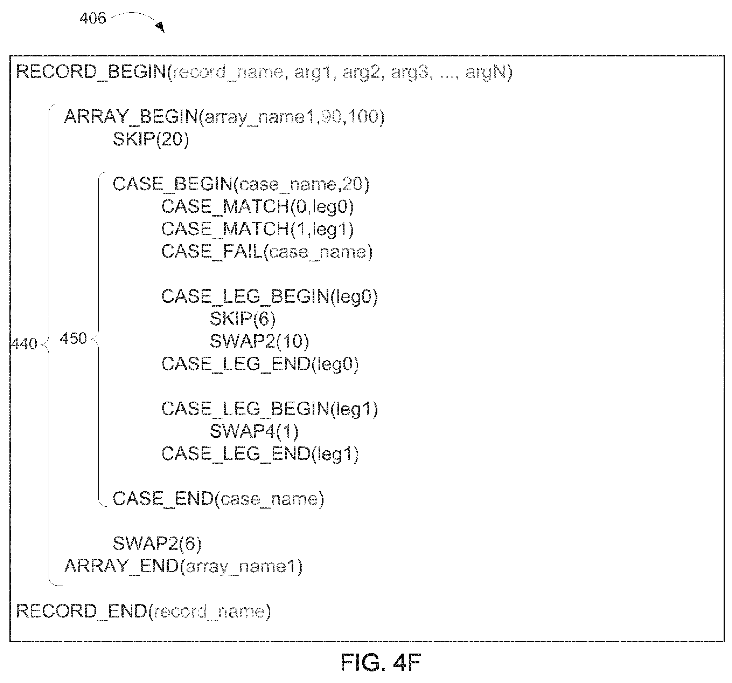

FIGURES 4D through 4F illustrate example record blocks 404-406 that include various case declarations 450. In some embodiments, a message can contain variant records that are dynamically evaluated on a case-by-case basis and endiancorrected accordingly. Each case declaration 450 can correspond to instruction code or definitions of a CASE definition in the tables 230-232. As shown in FIGURE 4D, a case declaration 450 includes the name 451 of the case and the size 452 of the largest case leg (in bytes). Within the bounds of each case declaration 450 are commands governing the remediation process. Cases can be nested, both in the source file (as shown in FIGURE 4E) and in tables 230-232. As shown in FIGURE 4F, cases and arrays can occur with each other and can nest within each other to an arbitrary depth.

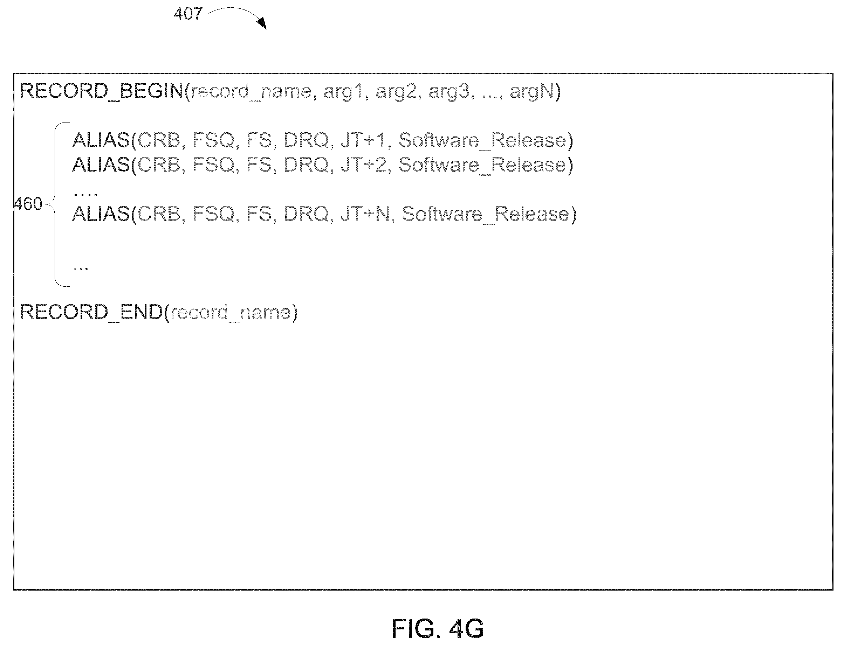

FIGURE 4G illustrates an example record block 407 that includes an ALIAS declaration 460. In some embodiments, a record may have one or more ALIAS declarations, which correspond to alias $JOB_IDENTIFIERs used in actual instruction code executed by the message remediator 150. These typically define multiple messages that share the same JOB QUEUE in the source code. Aliases provide alternate names for identical message formats, and are sometimes used as an organizational aid to message management. An alias can be any numerical value and is not limited to sequential ones like those shown in FIGURE 4G.

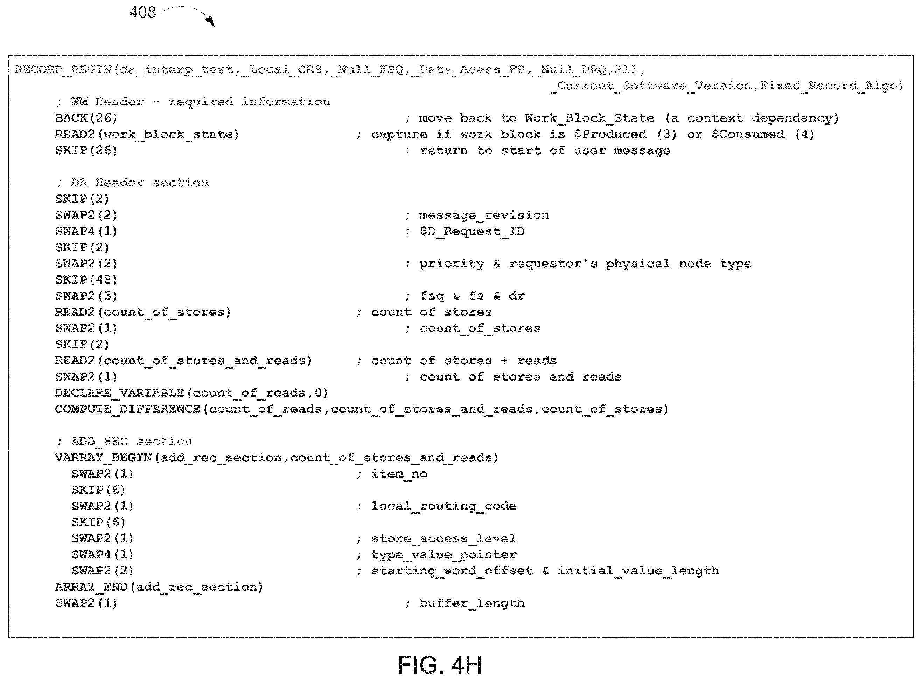

FIGURES 4H through 4J illustrate an example of one complete record block 408 for one message type "da_interp_test," which is for a data access interpretive test message. The record block 408 includes many of the commands and declarations described above with respect to FIGURES 4A through 4G.

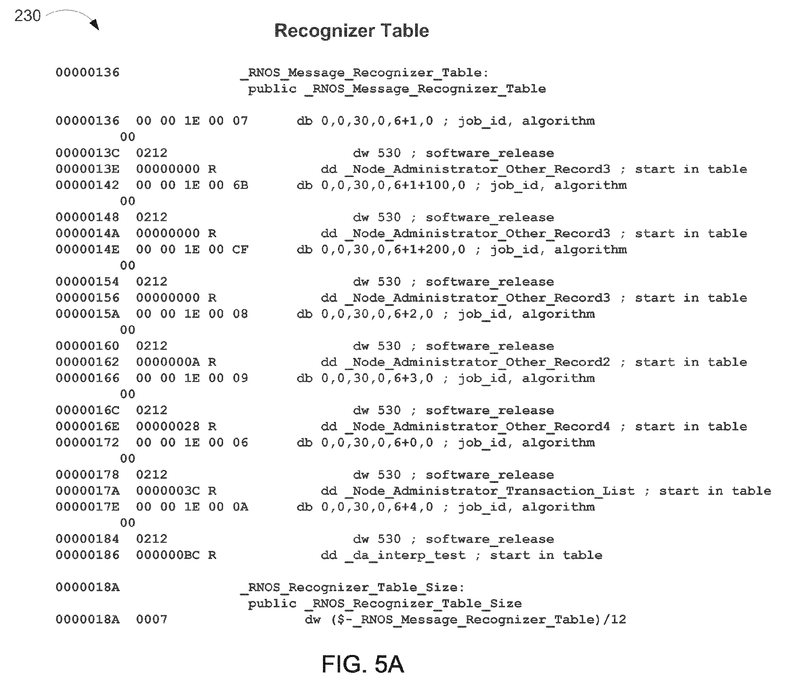

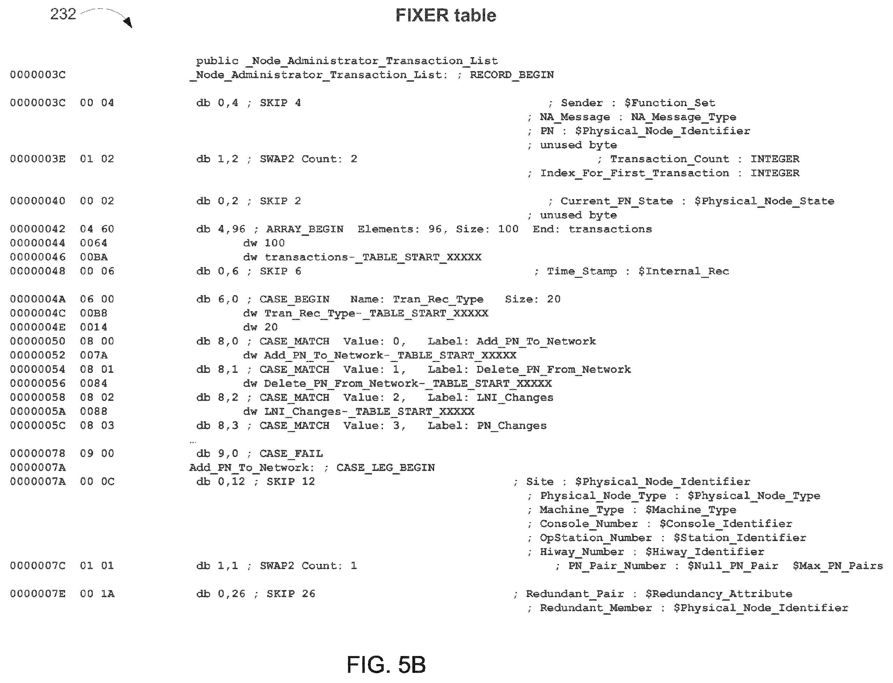

Once one or more source files 210 are prepared (such as by using the format of the table 300 and the record blocks 401-408 shown in FIGURES 3 through 4J), the source files can be compiled, assembled, or otherwise converted into machine readable instructions that include the recognizer table 230 and the fixer table 232. FIGURES 5A and 5B illustrate portions of example recognizer and fixer tables 230-232 according to this disclosure. As shown in FIGURE 5A, the recognizer table 230 includes recognition information for the different types of messages and their aliases. As shown in FIGURE 5B, the fixer table 232 includes table entries or instructions that control the actual message remediation.

Although FIGURES 3 through 5B illustrate an example data structure for a table, examples of record blocks in the table, and example tables, various changes may be made to FIGURES 3 through 5B. For example, the contents of FIGURES 3 through 5B are for illustration only and may change according to particular needs. Also, the tables 230-232 could be compiled, assembled, or otherwise arranged using any one of multiple suitable programming or development languages or tools.

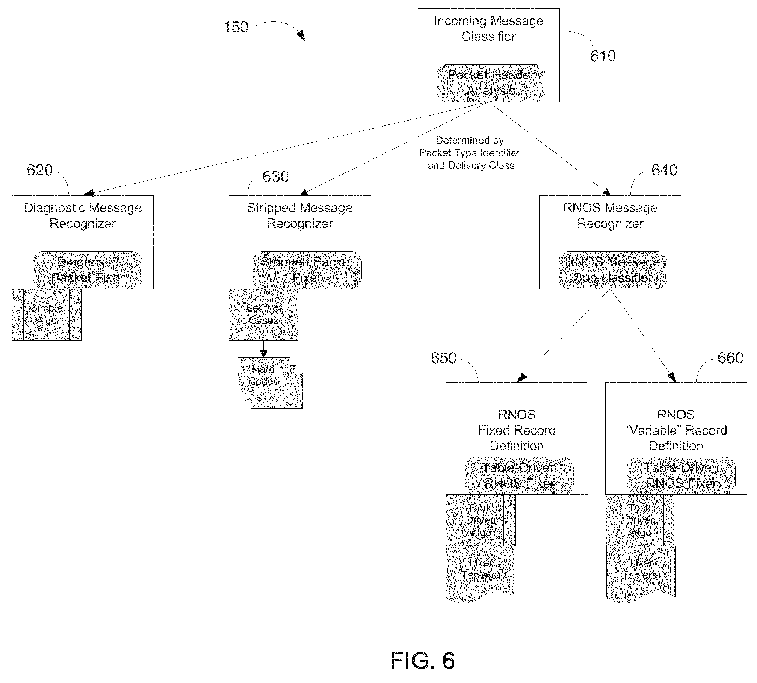

FIGURE 6 illustrates an example message remediator 150 of FIGURE 1 according to this disclosure. As shown in FIGURE 6, the message remediator 150 includes a classifier 610, a plurality of recognizers 620-640, and a plurality of remediators 650-660. Each of the recognizers 620-640 performs operations related to a different classification of message. In this example, the recognizers 620-640 include a diagnostic message recognizer 620, a stripped message recognizer 630, and a real-time network operating system (RNOS) message recognizer 640. Each of the remediators 650-660 performs remediation operations for a different classification of RNOS message. Here, the remediators 650-660 include a fixed record remediator 650 and a variable record remediator 660.

In this example, each message transmitted within a system and received by the message remediator 150 is classified as a diagnostic message, a stripped message, or an RNOS message. The classifier 610 performs this classification operation by examining information in the messages. For example, the classifier 610 can examine arguments, parameters, or identifiers contained in the packet header associated with the messages.

Once a received message has been classified by the classifier 610, the message is recognized by one of the recognizers 620-640. If the message is a diagnostic message, the diagnostic message recognizer 620 determines the type of the diagnostic message. If the message is a stripped message, the stripped message recognizer 630 determines the type of the stripped message. If the message is an RNOS message, the RNOS message recognizer 640 determines the type of the RNOS message. In some embodiments, the recognizers 620-640 use information from the recognizer table 230 to perform the recognition operations.

Once the type of a message is recognized by one of the recognizers 620-640, the message can be remediated. In some embodiments, for both diagnostic and stripped messages, the types of messages are few in number, and the format for each type is fixed. Thus, remediation is a very straightforward process that can be performed using a simple algorithm (such as for diagnostic messages) or a set of hard-coded routines (such as for stripped messages).

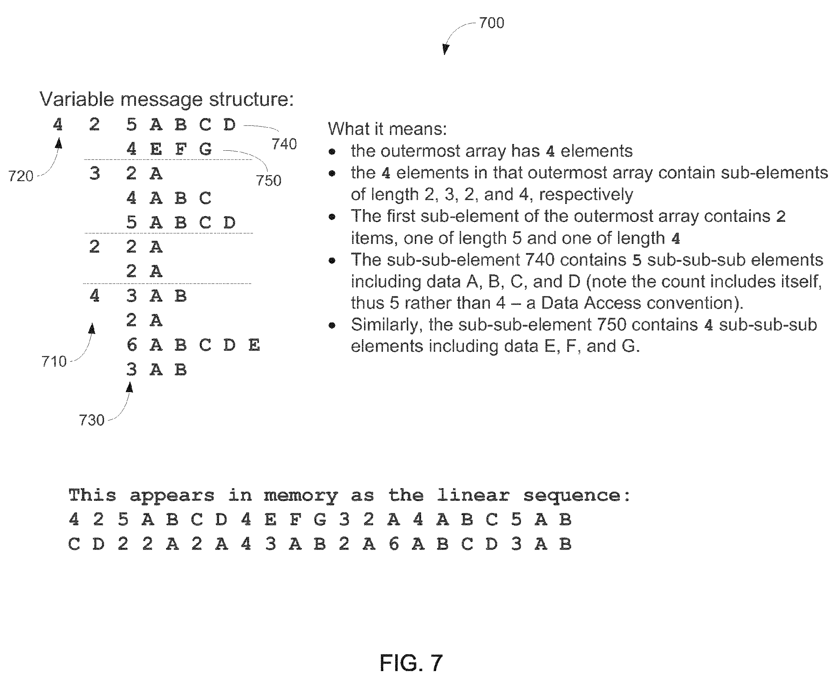

Among RNOS messages, there can be many (such as hundreds or thousands) of different message types, and the formats for the different message types can be more dynamic. In some embodiments, multiple algorithms can be used to handle the RNOS messages. In particular embodiments, RNOS messages can be further classified as fixed format or variable format. Fixed format RNOS messages have fixed record definitions, while variable format RNOS messages have variable record definitions. A record definition can vary due to conditional cases, variable-size arrays, or other factors. In some cases, variable format messages can contain multiple nested arrays of variable-sized elements. Variable format messages are described in greater detail with reference to FIGURES 7 through 9 below.

The fixed record remediator 650 remediates fixed format messages, while the variable record remediator 660 remediates variable format messages. For the classifications of RNOS messages, the remediators 650-660 use information from the fixer table 232 to remediate the messages. Based on the type of message being remediated, the corresponding remediator 650-660 remediates (or "fixes") the message by finding a routine of operations described in the fixer table 232 that correspond to that type of message and performing the operations. The operations in the fixer table 232 include one or more endian swaps on one or more data elements in the message, as necessary, based on the SWAP() commands shown in the algorithm 430. A distinct program or routine for each type of message is provided in the fixer table 232, based on a distinct record block in a source file 210, as described above.

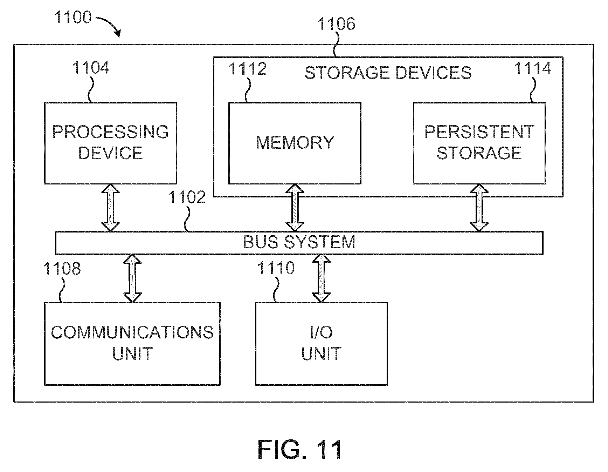

Although FIGURE 6 illustrates one example of the message remediator 150, various changes may be made to FIGURE 6. For example, various components in FIGURE 6 could be combined, further subdivided, or omitted and additional components could be added according to particular needs. As a particular example, the classifier 610, the recognizers 620-640, and the remediators 650-660 could be embodied in a single computing device, such as the one described in FIGURE 11 below.

FIGURE 7 illustrates an example variable format message 700 according to this disclosure. As shown in FIGURE 7, the variable format message 700 includes an outermost array 710 that contains four array elements with lengths of 2, 3, 2, and 4, respectively. The value '4' in the message 700 (as indicated at reference numeral 720) indicates the number of elements in the outermost array 710. The four elements in the outermost array 710 contain sub-elements 730 with lengths of 2,3,2, and 4, respectively, which correspond to the values of the elements in the array 710. For example, the first sub-element 730 of the outermost array 710 contains two items, one of length 5 and one of length 4. The sub-sub-element 740 contains five sub-sub-sub elements with data 'A', 'B', 'C', and 'D' (note that the count includes the '5' itself and is thus of size five rather than four, which is a data access convention). Similarly, the sub-sub-element 750 contains 4 sub-sub-sub elements containing data 'E', 'F', and 'G'. In such a variable format message 700, the "element count" fields require endian swapping, as do some of the data fields.

In addition to the record blocks 401-407 shown in FIGURES 4A through 4G, variable format messages 700 may require the use of other functions. For example, COMPUTE_SUM(), COMPUTE_DIFFERENCE(), COMPUTE_PRODUCT(), and COMPUTE_QUOTIENT() may be included in a source file 210 to support arithmetic operations in the remediation process. As another example, READ1(), READ2(), and READ4() may be included in a source file 210 to read variables stored in a memory.

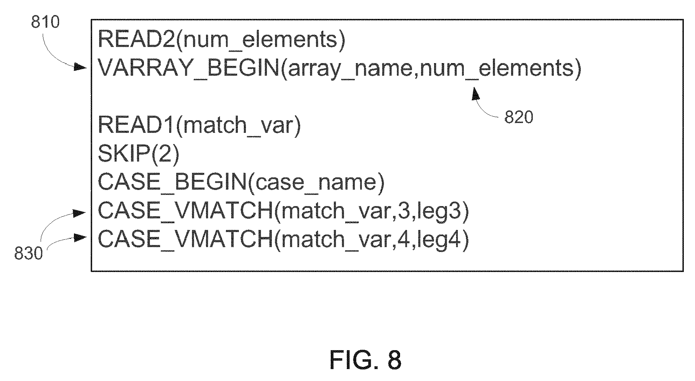

Some of these functions may include new record block configurations in a source file 210. For example, FIGURE 8 illustrates an example use of variable array (VARRAY) and case (CASE_VMATCH) functions 810-820 according to this disclosure. As shown in FIGURE 8, the VARRAY function 810 supports dynamically-sized arrays whose sizes are determined based on variables read from other locations in the messages. For example, the value of a num_elements field 820 defines a number of elements in a VARRAY function 810. The number of elements can come from a memory variable (e.g., via a READ1(), READ2(), or READ4() function). The size of each individual element is not given in the header, as the remediation process can account for all bytes in the VARRAY function 810 using SKIP or SWAP operators. The CASE_VMATCH function 830 supports dynamically-matched CASE selectors whose match values are based on variables that are previously read from a memory location in a message buffer memory.

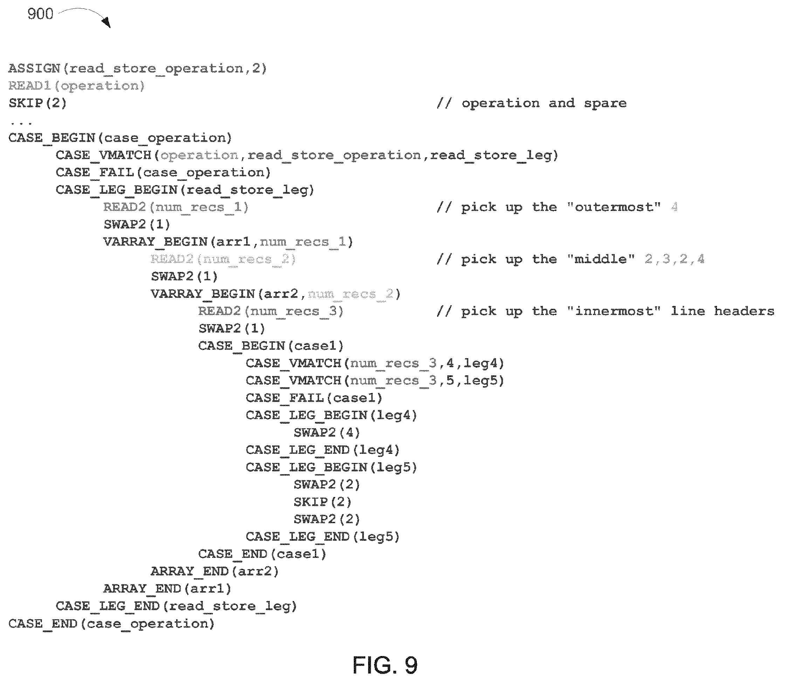

FIGURE 9 illustrates a portion of an example record block for a variable format message 900 according to this disclosure. As shown in FIGURE 9, the variable format message 900 supports the use of the VARRAY function 810 and the CASE_VMATCH function 820. Another example of a variable format RNOS message is the message type da_interp_test 408 shown in FIGURES 4H through 4J.

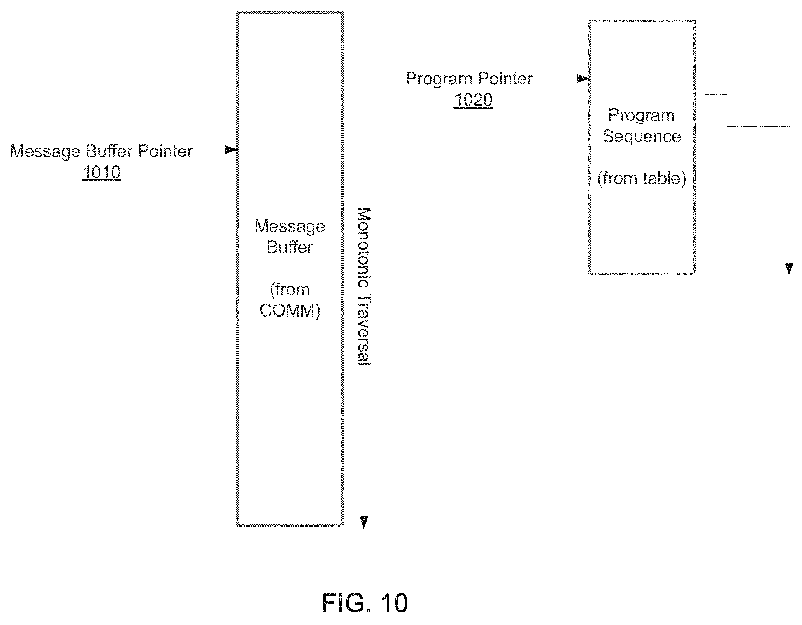

FIGURE 10 illustrates an example use of a message buffer pointer 1010 and a program pointer 1020 during endian remediation according to this disclosure. During the remediation process, the remediators 650-660 control operations using the message buffer pointer 1010 and the program pointer 1020. The message buffer pointer 1010 performs a monotonic traversal of a message buffer, performing endian swaps as needed along the way. The program pointer 1020, which follows the process of the "program" embodied in the fixer table 232, may move backward and forward based on any loops, conditionals, and branches found in the fixer table 232.

When the program begins, the message buffer pointer 1010 can point to the first word of the message buffer. When the program ends, the message buffer pointer 1010 may be at or near the end of the message buffer (or at least beyond the point where any further endian swapping is required). In some embodiments, most operators do not change the position of the message buffer pointer 1010, and only the following operators advance the message buffer pointer 1010: SWAP2(N), SWAP4(N), SKIP(N), STRING(M), ARRAY_END(array_name), CASE MATCH(case name), and CASE_LEG_END(case_name). In contrast, all operators may modify the program pointer 1020.

Although FIGURES 7 through 10 illustrate example details related to variable format messages and pointers, various changes may be made to FIGURES 7 through 10. For example, the contents of FIGURES 7 through 9 are for illustration only. Also, any other suitable storage and data access mechanisms could be used in FIGURE 10.

FIGURE 11 illustrates an example device 1100 for endian correction of complex data structures according to this disclosure. The device 1100 could, for example, represent a computing device that implements endian correction in the system 100 of FIGURE 1. The device 1100 could represent any other suitable device for endian correction of complex data structures.

As shown in FIGURE 11, the device 1100 can include a bus system 1102, which supports communication between at least one processing device 1104, at least one storage device 1106, at least one communications unit 1108, and at least one input/output (I/O) unit 1110. The processing device 1104 executes instructions that may be loaded into a memory 1112. The processing device 1104 may include any suitable number(s) and type(s) of processors or other devices in any suitable arrangement. Example types of processing devices 1104 include microprocessors, microcontrollers, digital signal processors, field programmable gate arrays, application specific integrated circuits, and discrete circuitry.

The memory 1112 and a persistent storage 1114 are examples of storage devices 1106, which represent any structure(s) capable of storing and facilitating retrieval of information (such as data, program code, and/or other suitable information on a temporary or permanent basis). The memory 1112 may represent a random access memory or any other suitable volatile or non-volatile storage device(s). The persistent storage 1114 may contain one or more components or devices supporting longer-term storage of data, such as a ready only memory, hard drive, Flash memory, or optical disc. In accordance with this disclosure, the memory 1112 and the persistent storage 1114 may be configured to store instructions associated with controlling a system clock for interleaved frequency switching.

The communications unit 1108 supports communications with other systems, devices, or networks, such as the networks 110-120. For example, the communications unit 1108 could include a network interface card that facilitates communications over at least one Ethernet network. The communications unit 1108 could also include a wireless transceiver facilitating communications over at least one wireless network. The communications unit 1108 may support communications through any suitable physical or wireless communication link(s).

The I/O unit 1110 allows for input and output of data. For example, the I/O unit 1110 may provide a connection for user input through a keyboard, mouse, keypad, touchscreen, or other suitable input device. The I/O unit 1110 may also send output to a display, printer, or other suitable output device.

Although FIGURE 11 illustrates one example of a device 1100 for endian correction of complex data structures, various changes may be made to FIGURE 11. For example, various components in FIGURE 11 could be combined, further subdivided, or omitted and additional components could be added according to particular needs. Also, control devices can come in a wide variety of configurations, and FIGURE 11 does not limit this disclosure to any particular configuration of control device.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. A controller may be implemented in hardware or a combination of hardware and software/firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
determining that a received message includes one or more data elements to be converted from a first endian format to a second endian format based on endian formats of a transmitter ( 111, 112, 121, 122) and an intended recipient (111, 112, 121, 122) of the message;
determining (610-640) a type of the received message;
based on the type of the received message, selecting a remediation routine for the message from a data structure (230, 232) that includes a plurality of remediation routines for a plurality of message types;
remediating (650,660) the message by changing the one or more data elements in the message from the first endian format to the second endian format according to instructions in the selected remediation routine; and
transmitting the remediated message to the intended recipient.

2. The method of Claim 1, wherein determining the type of the received message comprises:
classifying (610) the received message in one of a plurality of message classifications; and
based on the classification of the received message, determining (620-640) the type of the received message, wherein the type of the received message comprises one of a fixed format message or a variable format message.

3. The method of Claim 1, wherein the data structure comprises a table (230, 232, 300) that includes a distinct record block (301-303) for each message type.

4. The method of Claim 1, wherein:
the endian format of the transmitter is one of big-endian or little-endian; and
the endian format of the intended recipient is another of big-endian or little-endian.

5. The method of Claim 1, wherein:
the transmitter is one of a general-purpose computer (121, 122) or an industrial process controller (111, 112) in a process control system; and
the intended recipient is another of the general-purpose computer or the industrial process controller in the process control system.

6. The method of Claim 1, wherein the one or more data elements comprise at least one of:
a two-, four-, or eight-byte integer;
a four- or eight-byte floating point value; or
a multi-byte string.

7. An apparatus comprising:
at least one network interface (1108) configured to receive and transmit messages over at least one network (110, 120); and
at least one processing device (1104) configured to:
determine that a received message includes one or more data elements to be converted from a first endian format to a second endian format based on endian formats of a transmitter (111, 112, 121, 122) and an intended recipient (111, 112, 121, 122) of the message;
determine (610-640) a type of the received message;
based on the type of the received message, select a remediation routine for the message from a data structure (230, 232) that includes a plurality of remediation routines for a plurality of message types;
remediate (650, 660) the message by changing the one or more data elements in the message from the first endian format to the second endian format according to instructions in the selected remediation routine; and
initiate transmission of the remediated message to the intended recipient.

8. The apparatus of Claim 7, wherein the at least one processing device is configured to:
classify (610) the received message in one of a plurality of message classifications; and
based on the classification of the received message, determine (620-640) the type of the received message, wherein the type of the received message comprises one of a fixed format message or a variable format message.

9. The apparatus of Claim 7, wherein the data structure comprises a table (230, 232, 300) that includes a distinct record block (301-303) for each message type.

10. A method comprising:
receiving at least one source file (210) associated with a data endian remediation process for a plurality of message types, each message type including one or more data elements to be converted from a first endian format to a second endian format, the at least one source file including a distinct record block (301-303) for each of the message types; and
converting (220) the at least one source file into at least one machine-readable data structure (225, 230, 232) configured for use in the data endian remediation process of a message having a message type among the plurality of message types.
